# EUROPEAN PATENT APPLICATION

(11) **EP 0 801 891 A1**
(43) Date of publication of application: **22.10.1997**
(21) Application number: 94931187.2
(22) Date of filing: 31.10.1994
(51) Int. Cl.: A01G 31/00

(54) **HYDROPONIC METHOD FOR PLANTS AND APPARATUS USED THEREFOR**

(71) Applicant: NIPPON CARBIDE KOGYO KABUSHIKI KAISHA, Tokyo 100 (JP)
(72) Inventor: SUZUKI, Yoshihisa, Uozo-shi, Toyama 937 (JP); HARASAWA, Isamu, Higashikurume-shi, Tokyo 203 (JP); SUGITA, Katsumasa, Shimoniikawa-gun, Toyama 939-06 (JP); SHIINA, Tosikatu, Namerikawa-shi, Toyama 936 (JP)
(74) Representative: Kraus, Walter, Dr.
(86) International application number: JP9401829
(87) International publication number: WO9613148

(57) **Abstract**

This invention provides a method for hydroponically culturing plants by using a culture bed comprising an inorganic or organic porous medium, characterized in that a liquid fertilizer is supplied from a position above the culture bed to a rooting zone support portion thereof in the form of droplets having an average diameter of not greater than 1 mm, and an apparatus used for carrying out this method.

According to the present invention, the growth of roots of plants is promoted. As a result, the growth of the plants is promoted, so that the yield and quality thereof can be improved.

## Description

### Technical Field

This invention relates to a method for hydroponically culturing plants, and an apparatus used therefor. More particularly, it relates to a method for hydroponically culturing plants while vitalizing them, and an apparatus used therefor.

### Background Art

Conventionally, various methods of supplying a liquid fertilizer in the hydroponic culture of plants have been proposed. As one of them, a method of supplying a liquid fertilizer to the rooting zone of useful plants in the form of streams or liquid drops has been proposed. However, these conventional methods do not enable liquid fertilizers to exhibit adequate efficacy, so that it is desired to make further improvements on the way of supplying liquid fertilizers. With respect to the timing of supply and feed rate of a liquid fertilizer, several proposals have conventionally been made, for example, in "Rock Wool Culture of Vegetables and Flowering Plants" (written by Dennis Smith and translated by Hideo Ikeda and Yutaka Shinohara; published by Seibundo Shinkosha on May 20, 1989).

For example, a method of supplying a liquid fertilizer in proportion to the cumulative amount of solar radiation. However, since the intake of a liquid fertilizer by plants is not exactly proportional to the amount of solar radiation, this method has often showed a tendency in which the supply of the liquid fertilizer is excessive in the presence of ample sunshine and, conversely, the plants run short of nutrients in the presence of scanty sunshine.

In order to solve the above-described problem, a method of supplying a liquid fertilizer under the control of a timer has been proposed. However, this method involves a problem in that, since the intake of a liquid fertilizer by plants differs between day and night, an oversupply or undersupply (drying) of the liquid fertilizer may result in the day or night.

In order to solve the above-described problem, methods of supplying a liquid fertilizer while directly measuring the water content of the culture bed have been proposed. One of these methods involves direct measurement of the weight of culture bed. However, this method is not applicable to cases in which plants are cultured without hanging them from above.

There has been proposed another method in which the amount of water retained in the culture bed is measured with moisture sensors. However, when this method is applied, for example, to a culture bed made of rock wool, its water-retention properties vary greatly with the position because of wide variation in the density of rock wool. Accordingly, this method is not extensively used for practical purposes.

Moreover, porous materials including rock wool, peat moss, urethane foam and the like have conventionally been proposed for use as rooting zone supports constituting culture beds used in hydroponic culture.

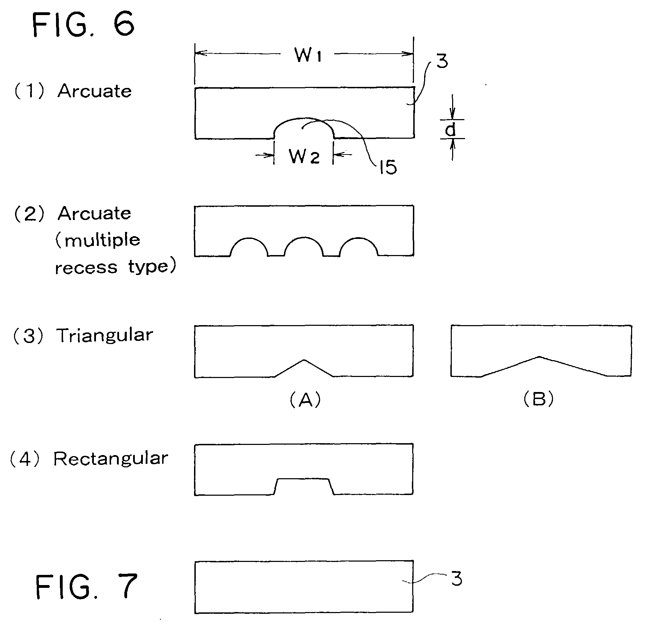

However, in all of the conventionally proposed rooting zone supports, the bottom thereof has a flat surface (see FIG. 7). Thus, during the cultivation of plants, the liquid fertilizer supplied to the top surface of the rooting zone support always stays at the bottom thereof while forming a liquid layer having a definite thickness (i.e., in the form of stagnant water). Consequently, the intake of oxygen by the branching roots of the plants which have grown to the bottom surface and exhibit high oxygen-absorbing power depends substantially on the oxygen dissolved in the liquid fertilizer, so that its intake becomes highly insufficient. Especially when plants requiring a large amount of oxygen absorbed by roots, such as roses, orchids and melons, are cultured by use of such a rooting zone support, their sound growth is very difficult.

Conventionally, there have been proposed hydroponic culture apparatus having a construction which permits oxygen to pass through the rooting zone support. However, the removal of noxious gases such as carbon dioxide is impossible in this apparatus. Consequently, it has often happened that plants cannot grow actively owing to the accumulation of noxious gases in the rooting zone support.

For example, where plants belonging to the rose family are cultured to obtain flowering rose branches as products, raising and harvesting operations are usually repeated several times at intervals of 40 to 60 days. When rose branches are cut, the metabolic balance between the overground and the underground part is disturbed to impose stress on the rooting zone and induce the disintegration of roots. In time, new roots are regenerated. It is known that this regeneration is greatly affected not only by nutrient but also by the composition of air (or the gas). The favorable gaseous environment of the rooting zones is an environment to which plenty of oxygen is supplied and from which noxious gases such as carbon dioxide and sulfide gases are removed. In the actual rooting zones, however, noxious gases such as carbon dioxide excreted by sound roots are accumulated. As a result, the rooting zones come to undergo stress.

On the other hand, the roots having undergone stress provide an environment favorable for saprophytic microorganisms inhabiting the rooting zones and thereby promote the growth of these microorganisms. The metabolites and gases (e.g., carbon dioxide) excreted by the microorganisms, and the gases (e.g., sulfide gases) resulting from the disintegration of the roots increasingly aggravate the gaseous environment of the rooting zones. If this further advances into an anaerobic environment, the environment of the rooting zones becomes worst owing to the formation of poisonous gases such as hydrogen sulfide, and thereby affects the absorption of nutrients. As a result of such aggravation of the gaseous environment, the roots in the rooting zones blacken and soften, and finally suffer decay.

Thus, in the conventional hydroponic culture methods and apparatus, the problems concerning the form of the supplied liquid fertilizer and the timing of supply and feed rate thereof and, moreover, the problems concerning the shape of the culture bed and the accumulation of noxious gases in the culture bed still remain unsolved.

Consequently, in the conventional hydroponic culture methods and apparatus, plants have been cultured in such a state that they cannot grow satisfactorily or cannot exhibit their inherent capabilities to the fullest extent. For these reasons, they have had the disadvantage that the plants fail to strike root satisfactorily, their growth is retarded, their resistance to diseases is reduced, and an improvement in yield and quality cannot be achieved.

Especially in the hydroponic culture of roses, it is generally known that, after flowers are harvested, the roots of the roses lose vitality or die in proportion to the amount of branches cut. In order to hasten the next harvest as much as possible in such a case, it is a key point of cultivation to promote the new spread of roots and restore the growth of the overground part (or branches) as quickly as possible. In the conventional hydroponic culture methods, the plants lack vitality and, therefore, the time required for the recovery of roots is prolonged. This is disadvantageous in that not only the yield but also the quality is significantly reduced. Accordingly, it has been strongly desired in the art to develop a hydroponic culture method which can vitalize plants.

The present inventors have now found that, in the hydroponic culture of plants by using a culture bed made of a porous material, the plants can be markedly vitalized by supplying a liquid fertilizer to a rooting zone support portion of the culture bed in the form of droplets having a specific diameter, resulting in an improvement in the yield and quality of the plants or fruits.

### Disclosure of the Invention

Thus, the present invention provides a method for hydroponically culturing plants by using a culture bed comprising an inorganic or organic porous medium, characterized in that a liquid fertilizer is supplied from a position above the culture bed to a rooting zone support portion thereof in the form of droplets having an average diameter of not greater than 1 mm.

The present invention will be more specifically described hereinbelow.

No particular limitation is placed on the "inorganic or organic porous medium" used as the culture bed in the method of the present invention, and any porous medium made of an inorganic or organic material may be used. For example, any of various porous media which have conventionally been used in hydroponic culture may be used. Specific examples of inorganic porous media include masses of granules, foam-like masses, masses of fibers, and crushed rocks. Among others, porous media comprising masses of fibers are preferably used.

The materials of the aforesaid granular porous media include, for example, sand, gravel, artificial aggregates and fumed charcoal. Among others, gravel is preferred. The materials of foam-like porous media include, for example, ceramics foam and foam glass; the materials of fibrous porous media include, for example, rock wool and glass wool; and the materials of rock-derived porous media include, for example, pearlite and vermiculite.

Specific examples of organic porous media include porous media made of such materials as peat moss, sawdust, bark, plastic foams (e.g., urethane foam) and nonwoven fabrics. Among others, porous media made of peat moss and sawdust are preferably used.

On the other hand, no particular limitation is placed on the "plants" which can be cultured according to the present invention, and the present invention may be applied to any plants that can be hydroponically cultured. Generally, they include crops and like plants as described in "An Exhaustive encyclopedia of Agriculture (7th Edition)" (edited by the committee for the compilation of an exhaustive encyclopedia of agriculture; published by Yokendo on February 1, '67), pages 431-610; and forestry trees and like plants as described in "A Full-color Illustrated Book of the Japanese Forestry Trees", Volumes 1-5 (edited by Satoru Kurata; published by Chikyusha).

More specifically, the following crops and forestry trees, for example, can be cultured according to the method of the present invention.
(1) Crop plants
   ① Food crops
      Rice, wheat, maize, soybean, sweet potato, potato, etc.
   ② Horticultural crops
      Fruit trees: Apple, pear, persimmon, peach, Japanese apricot, grape, loquat, tangerine, etc.
      Vegetables: Cucumber, watermelon, tomato, strawberry, etc.
      Flowering plants:
         (i) Annual and biennial plants: Morning glory, cosmos, Iceland poppy, aster, yellow sultan, snapdragon, common marigold, stock, pansy, sunflower, venidium, dimorphotheca, safflower, white lace flower, cornflower, Turkish bellflower, rhodanthe, etc.
         (ii) Perennial plants: Lawn grasses, Oriental orchids, baby's breath, carnation, gerbera, Chinese bell flower, chrysanthemum, rabbit-ear iris, statice, poeny, marguerite, etc.
         (iii) Balbaceous plants: Lilies, gladiolus, iris, anemone, calla, narcissus, freesia, turban buttercup, blackberry lily, etc.
         (iv) Flowering trees: Acacia, azalea, rose, New Zealand flax, Satsuki azalea, crape myrtle, daphne, senryo, cycad, camellia, sasanqua, eucalyptus, etc.
         (v) Greenhouse plants: Occidental orchids, cyclamen, etc.
   ③ Industrial crops
      Oil crops: Rapeseed, sesame, etc.
      Sugar crops: Sugar cane, beet, etc.
      Fiber crops: Cotton, flax, etc.
      Starch crops: Devil's-tongue, etc.
      Medical crops: Peppermint, poppy, etc.
      Stimulant crops: Tea tree, tobacco, hop, etc.
      Paper-making crops: Paper mulberry, mitsumata, etc.
      Dyeing crops: Japanese indigo plant, etc.
      Perfume crops: Geranium, etc.

      Sap crops: Japanese lacquer tree, etc.
   ④ Forage crops
      Feed crops: Orchard grass, red clover, white clover, etc.
      Feed/manure crops: Bread tree, silk-tree, etc.
      Green manure crops: Chinese milk vetch, bur clover, etc.
(2) Forestry trees
   Coniferous trees: Japanese cedar, white cedar, pine, etc.
   Evergreen broadleaf trees: Japanese laurel, Japanese fatsia, etc.
   Deciduous broadleaf trees: Japanese oak, Japanese beech, etc.

Among these plants, (1) crop plants are preferred, ② horticultural crops are especially preferred, and vegetables and flowering plants are most preferred. In particular, the method of the present invention is preferably applicable to flowering plants and most preferably applicable to roses.

The term "hydroponic culture" as used herein comprehends culture methods described in "An Encyclopedia of Hydroponics (4th Edition)" [edited by Mitsuo Takekawa; published by Fumin Kyokai (Inc.) on July 25, 1988]. More specifically, they are methods for culturing plants without using soil, and are also known as soil-free culture methods. Hydroponic culture methods can be classified into ones using a root-supporting medium, ones allowing roots to float in a liquid, and ones not coming under these categories. In the present invention, hydroponic culture methods using a root-supporting medium are preferably used.

Hydroponic culture methods using a root-supporting medium include inorganic medium cultures and organic medium cultures, and inorganic medium cultures are preferred. Examples of inorganic medium cultures include sand culture, sandponics, gravel cultures such as natural gravel culture and artificial gravel culture (hydroculture), artificial aggregate culture, fumed charcoal culture, urethane culture, rock wool culture, pearlite culture and vermiculite culture. Among others, rock wool culture, sand culture, gravel culture and fumed charcoal culture are preferred, and rock wool vulture is especially preferred.

Moreover, examples of organic medium cultures include peat moss culture, sawdust culture, bark culture, artificial standard soil culture and nonwoven fabric culture. Among others, peat moss culture is preferably used.

Furthermore, the term "rooting zone" generally means a surrounding region in which the roots of each plant are growing. More specifically, the rooting zone consists of plant roots themselves and their surfaces, and a region adjacent to the plant roots [i.e., in a root system formed of initially developing roots (hereinafter also referred to as "primary roots") and roots successively branching therefrom and continuing to grow (hereinafter also referred to as "branching roots"), a continuous region filling the spaces between primary roots, between primary roots and branching roots, and between branching roots]. A member functioning to support such rooting zones is a "rooting zone support".

In the present invention, a culture bed comprising an inorganic or organic porous medium as described above is used as the rooting zone support.

The method of the present invention is characterized in that a liquid fertilizer is supplied from a position above the culture bed to the rooting zone support portion thereof in the form of droplets having an average diameter of not greater than 1 mm.

The term "liquid fertilizer" as used herein means liquid manure prepared by dissolving, in an aqueous medium, some or all of the nutrients required in the hydroponic culture of plants. No particular limitation is placed on the components and composition thereof, and they may be arbitrarily varied according to the type of the plants cultured. Specifically, there may be used liquid fertilizers containing a well-balanced mixture of nutrients (e.g., nitrogen, phosphate, potassium, lime, magnesia, sulfur, iron, boron, manganese, zinc, molybdenum, copper, chlorine, silicon, cobalt, vanadium, aluminum and selenium) in amounts required for the growth of crops. More specifically, useful liquid fertilizers include Horticultural Experiment Station Standard Formulation, Yamazaki's Formulation, Kanagawa Horticultural Experiment Station Formulation, Chiba Agricultural Experiment Station Formulation, Osaka Agricultural Technical Center Formulation, Aichi General Agricultural Experiment Station Formulation, Shimura's Formulation and the like, as described in "A Textbook for Hydroponic Culture" [edited by Mitsuo Takekawa; published by Fumin Kyokai (Inc.) on March 30, 1990], pages 40-41. In addition, commercially available liquid fertilizers for exclusive use in hydroponics include Otsuka Kagaku's Formulations A and B, Katakura's Chikkarin, Taki Kagaku's Glodan and the like. These liquid fertilizers may suitably be chosen and used according to the type of the crops cultured, the stage of growth, the time of cultivation, and the like.

In the present invention, such a liquid fertilizer is supplied to the rooting zone support portion of the culture bed in the form of droplets having an average diameter of not greater than 1 mm, preferably not greater than 0.5 mm, more preferably not greater than 0.3 mm, and most preferably not greater than 0.2 mm.

Useful methods for supplying a liquid fertilizer to the rooting zone support portion in the form of droplets having an average diameter in the above-described range include, for example, (1) the method of spraying a liquid fertilizer in the form of droplets by use of pressurized water spray nozzles which are commonly used in the spraying of agricultural chemicals; (2) the method of atomizing a liquid fertilizer into droplets by spouting the pressurized liquid fertilizer from jet nozzles in the form of lines, films, rods or the like and causing it to impinge against an obstacle disposed above the rooting zone support; and (3) the method of supplying a liquid fertilizer from a position above the rooting zone support in the form of thin lines, films, rods or the like. Among others, the method (2) is preferably employed in the present invention.

Accordingly, the method (2) is more specifically described below with reference to the accompanying drawings.

In the drawings:
FIG. 1 is a schematic view illustrating the whole of a hydroponic culture apparatus for carrying out the method of the present invention;
FIGs. 2 and 3 are schematic views illustrating two examples of a liquid fertilizer feeding device in accordance with the present invention;
FIG. 4 includes sectional views showing the relationship between a jet nozzle and an obstacle;
FIG. 5 is a schematic view showing a cross section of the culture bed part of the apparatus of FIG. 1;
FIG. 6 includes schematic view showing various embodiments of the culture bed;
FIG. 7 is a schematic view showing a cross section of an example of a conventional hydroponic culture bed;
FIG. 8 is a schematic view illustrating the whole of a conventional hydroponic culture apparatus;
FIG. 9 is a schematic view illustrating a liquid fertilizer feeding device used in Comparative Example 1 which will be given later; and
FIG. 10 is a schematic view illustrating a liquid fertilizer feeding device used in Comparative Example 2 which will be given later.

In these figures, common components are designated by the same reference numerals, which have the following meanings.

1 ... an obstacle (specifically a liquid fertilizer rebounding plate), 2 ... pots, 3 ... a rooting zone support (e.g., a rock wool mat), 4 ... a rock wool bed stand, 5 ... a liquid fertilizer feed tube, 6 ... a ventilation window, 7 ... a drain pipe, 8 ... a feed pipe, 9 ... drip irrigation tubes, 10 ... bed-inserted microtubes, 11 ... a nonwoven sheet, 12 ... a cover film, 13 ... jet nozzles, 14 ... a liquid fertilizer, 15 ... a recess in the culture bed, 16 ... a ventilating fan, 17 ... a drain box, 18 ... grooves.

The method of the present invention can basically be carried out in an apparatus for hydroponically culturing plants which has a culture bed comprising an inorganic or organic porous medium, characterized in that the apparatus is equipped with a liquid fertilizer feeding device capable of supplying a liquid fertilizer from a position above the culture bed to a rooting zone support portion thereof in the form of droplets having an average diameter of not greater than 1 mm.

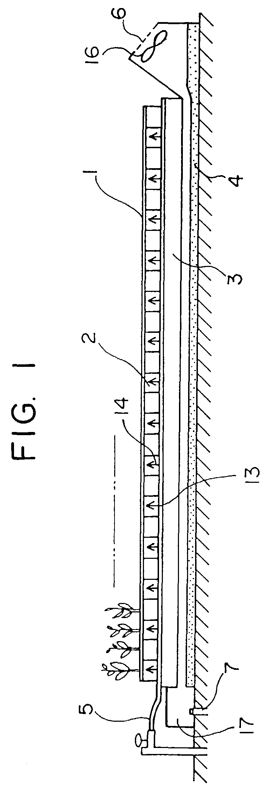

In the apparatus of the present invention, as illustrated in FIG. 1, a prepared liquid fertilizer is fed to a liquid fertilizer feed tube 5 by means of a liquid fertilizer feed pump and spouted from jet nozzles 13 formed in liquid fertilizer feed tube 5 toward an obstacle 1. The resulting droplets of the liquid fertilizer are supplied to and infiltrated into a rock wool mat 3 serving as a rooting zone support. That portion of the liquid fertilizer which has not been absorbed by the plants is withdrawn through a rock wool bed stand 4, stored temporarily in a drain box 17, and then discharged through a drain pipe 7. Moreover, a ventilating fan 16 is installed in order to discharge noxious gas accumulated in rock wool mat 3.

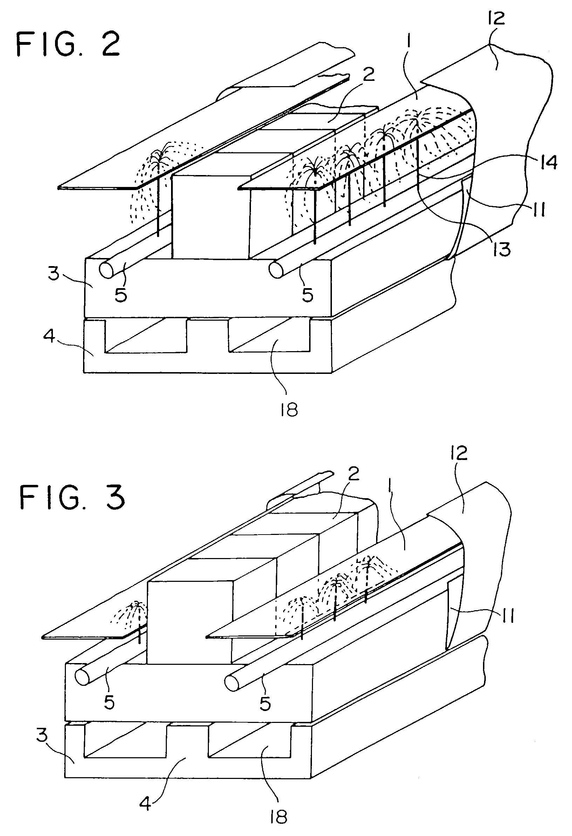

A liquid fertilizer feeding device which can be preferably used in this hydroponic culture apparatus is illustrated in FIGs. 2 and 3.

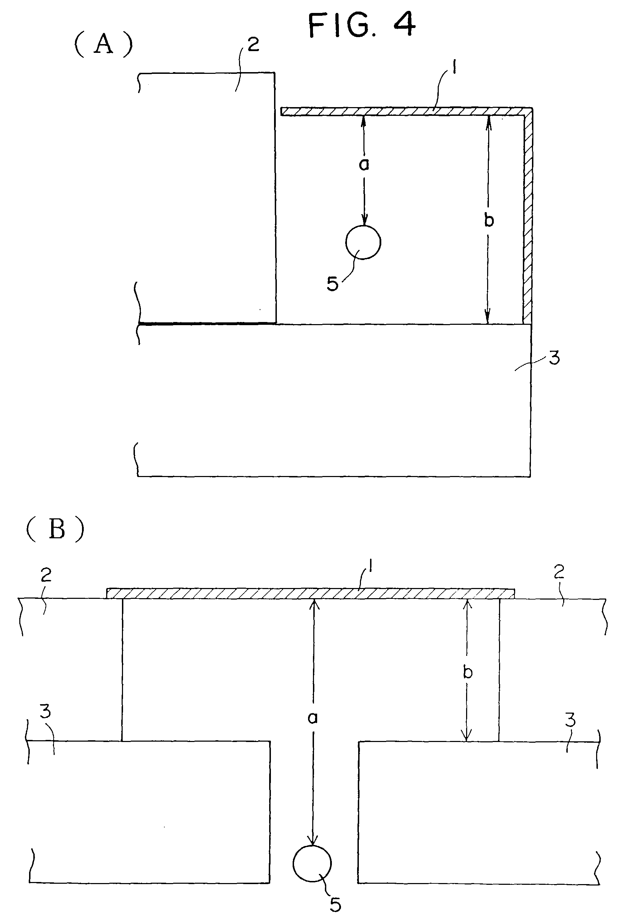

The liquid fertilizer feeding device which can be preferably used in the present invention comprises liquid fertilizer feed tubes 5 having jet nozzles 13 for delivering the liquid fertilizer maintained at a predetermined hydraulic pressure, for example, by means of the liquid fertilizer feed pump to the rooting zone support portion, and obstacles 1 disposed above liquid fertilizer feed tubes 5 at a predetermined distance (i.e., distance a shown in FIG. 4) therefrom and each having the form of a plate, a film, a block, a mass of fine particles, or the like. Thus, liquid fertilizer 14 spouted from jet nozzles 13 in the form of lines, films, rods or the like is caused to impinge against with obstacles 1 and scattered in the form of droplets. The resulting droplets fall on the rooting zone support portion of the culture bed and permeates thereinto.

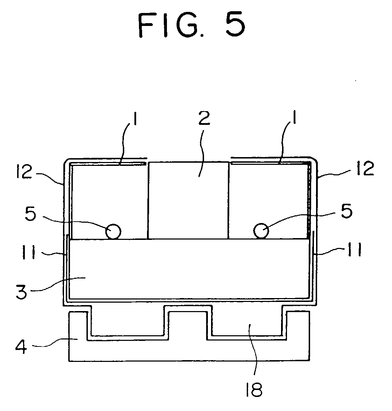

As shown in the sectional view of FIG. 5, the culture bed illustrated in FIG. 2 has, on the top surface of rooting zone support 3, pots 2 in which plants to be cultured have been planted in advance. No particular limitation is placed on the material of these pots 2, and any desired material may be used. However, the same material as that of rooting zone support 3 is commonly used. In the present invention, pots made of rock wool are preferably used.

After planting, the rooting zones of the plants expands gradually from pots 2 to the whole of rooting zone support 3.

In order to shield the rooting zones from external light and insulate them thermally, and in order to prevent the liquid fertilizer from escaping to the outside, the feeding device is wholly covered with a cover film 12. Usually, this cover film should preferably have a black outside surface and an inside surface endowed with light and heat reflecting properties, for example, by aluminizing. Moreover, this cover film 12 is disposed so that it comes into close contact with the inner walls of grooves 18 of rock wool bed stand 4. These grooves 8 serve as channels for draining the liquid fertilizer which has not been absorbed in rooting zone support 3, and as passages for discharging noxious gases by means of ventilating fan 16 shown in FIG. 1.

Furthermore, a nonwoven sheet 11 is disposed so as to cover the lateral and bottom surfaces of rock wool mat 3. This nonwoven sheet 11 allows the liquid fertilizer and air to pass therethrough freely, but functions to prevent the plant roots from extending to the outside and also to prevent rock wool mat 3 from drying. This nonwoven sheet may be made of any material that can fulfill the above-described functions. Generally, nonwoven fabrics, nets, cloth and the like are used according to the type of the plants cultured. Among others, nonwoven fabrics are preferred.

Furthermore, no particular limitation is placed on the material of rock wool bed stand 4 serving as a stand for rock wool mat 3, and any material that can support the rock wool mat my be used. However, it is generally preferable to use polystyrene foam with consideration for its thermal insulating properties.

No particular limitation is placed on the liquid fertilizer feed pump for delivering the liquid fertilizer to feed tubes 5, and any type of pump may be used. Generally, there may be used turbopumps such as volute pumps, axial-flow pumps and mixed flow pumps; and positive-displacement pumps such as reciprocating pumps and rotary pumps. Especially preferred are turbopumps. Among others, volute pumps are preferably used.

The hydraulic pressure of the liquid fertilizer within the feed tubes is kept constant, for example, by the action of the aforesaid pump and the control of the height of a liquid fertilizer tank. It is desirable that its hydraulic pressure is generally kept in the range of about 0.4 to about 1 kg/cm² and preferably about 0.5 to about 0.6 kg/cm².

The liquid fertilizer delivered to feed tubes 5 is spouted from liquid fertilizer jet nozzles 13. No particular limitation is placed on the type of jet nozzles 13, so long as they can spout the liquid fertilizer in the form of lines, films, rods or the like. The orifice diameter or slit width of the jet nozzles may generally be in the range of 0.1 to 3 mm and preferably 0.2 to 2.5 mm. It is desirable that the diameter or film thickness of liquid fertilizer 14 spouted from these nozzles is generally adjusted so as to be in the range of 0.1 to 3 mm and preferably 0.3 to 0.6 mm.

Furthermore, although the spacing between adjacent jet nozzles is not strictly limited, it is generally desirable that the spacing is preferably in the range of 5 to 20 cm and more preferably 7 to 10 cm.

On the other hand, obstacles 1 serve for the purpose of causing liquid fertilizer 14 spouted from jet nozzles 13 in the form of lines, films, rods or the like to impinge against a surface thereof and thereby rebounding and scattering it in the form of droplets. No particular limitation is placed on the shape and material obstacles 1, so long as the above purpose can be accomplished. Generally, plates having a relatively smooth surface against which the liquid fertilizer is caused to impinge (hereinafter referred to as "liquid fertilizer rebounding plates" or simply as "rebounding plates") are preferably used.

The material of the rebounding plates may be selected from inorganic materials such as metals, concrete, stone and glass; and organic materials such as rubber, synthetic resins (e.g., vinyl chloride resin, polyethylene, polypropylene, polyester resin and fluororesin). Especially preferred are plates made of vinyl chloride resin ((PDC), polyethylene (PE) or polypropylene (PP).

Obstacles 1, preferably rebounding plates, are disposed above the liquid fertilizer feed tubes with consideration for their surface configuration, tilt angle and the like, so that the liquid fertilizer impinging against them is rebounded and scattered in the form of fine droplets.

The surface configuration of the rebounding plates may usually be made smooth. In some cases, however, however, grooves or indentations having a depth or height of about 0.01 to about 5 mm and preferably about 0.1 to about 1 mm may be formed therein. Thus, the size of the rebounded and scattered droplets of the liquid fertilizer can be controlled.

Moreover, the tilt angle of the rebounding plates can be empirically determined on the basis of small-scale experiments.

Furthermore, the size of the droplets can also be controlled by regulating the distance between jet nozzles 13 and rebounding plates 1 (i.e., distance a shown in FIG. 4). Distance a may generally be in the range of 0.5 to 50 cm, preferably 1 to 30 cm, more preferably 5 to 20 cm, and most preferably 7 to 10 cm.

On the other hand, the distance from rebounding plates 1 to the surface of rooting zone support portion 3 of the culture bed (i.e., distance b shown in FIG. 4) is not strictly limited. However, it is desirable to determine distance b so that the liquid fertilizer rebounded and scattered in the form of droplets will stay in the air as long a period of time as possible. However, if it stays in the air for an unduly long period of time, the water present in the liquid fertilizer may evaporate to cause concentration thereof. When consideration is also given to the space requirements of the apparatus, workability for cultivation, the maintenance and control of the apparatus, and the like, it is advisable that distance b is generally in the range of 3 to 100 cm, preferably 5 to 50 cm, more preferably 7 to 30 cm and most preferably 10 to 15 cm.

The angle at which the liquid fertilizer spouted from the jet nozzles impinges against the rebounding plates is not strictly limited, but may be varied according to the form and pressure of the spouted liquid fertilizer, and the like. However, the angle may generally be in the range of about 1 to about 90 degrees, preferably about 30 to about 90 degrees, and more about 60 to about 90 degrees, with respect to the surface of the rebounding plate.

As used herein, the "average diameter" of the droplets of the liquid fertilizer is a value obtained by excluding 10% of larger droplets and 10% of smaller droplets from all of the droplets of the liquid fertilizer supplied from a position above the culture bed to the rooting zone support portion thereof, and calculating the average diameter of the remaining 80% of droplets.

No particular limitation is placed on the method for measuring the diameters of droplets, and any per se known method for measuring the diameters of droplets may be employed. However, as an example, a convenient method for measuring the diameters of droplets obtained by use of the above-described jet nozzles and rebounding plates is described below.

When the liquid fertilizer spouted from the jet nozzles impinges against the rebounding plates, it is rebounded and scattered in the form of fine droplets. The number of falling droplets is greatest in the neighborhood of the jet nozzles, where it is difficult to collect droplets in an isolated state. Thus, droplets falling on a horizontal surface region located at a predetermined distance from an jet nozzle are captured and the diameters of these droplets are measured.

No particular limitation is placed on the plate having a horizontal surface for capturing droplets, and there may be used any plates having a horizontal surface which is smooth and has the property of repelling the droplets. More specifically, a plate having a surface whose wettability index is not greater than 50 dynes/cm and preferably not greater than 35 dynes/cm can be used. An example of a plate meeting these property requirements is a rubber plate [Everlite (product code: BSNB-010); manufactured by Bridgestone Corp.; made of natural rubber; having a wettability index of 45 dynes/cm for the front surface and 32 dynes/cm for the back surface].

Since droplets captured on this plate dry up in a short period of time, the plate having droplets captured thereon is immediately transferred to a water-saturated environment, where the diameters of the droplets are measured by use of a measuring device such as vernier calipers.

In the present invention, no particular limitation is placed on the timing of supply of the liquid fertilizer and the feed rate thereof, and they may be varied according to the type of the plants cultured, the composition of the liquid fertilizer, and the like. However, as a result of investigations made for the purpose of promoting the sound growth of plants, the present inventors have found that, as a general rule, plants are markedly vitalized when they are cultured under such conditions that the feed ratio (x/y), which is defined as the ratio of the amount (x) of liquid fertilizer supplied in a unit time to the resulting amount (y) of liquid fertilizer drained, is in the range of 1.6 to 6.

Usually, the liquid fertilizer is not supplied continuously, but intermittently. In the timing of supply of the liquid fertilizer, the term "unit time" means the time interval between one supply of the liquid fertilizer and the next supply thereof, and this may suitably be determined according to the type of the plants cultured, the time of cultivation, the hydroponic culture method, the weather and the like. For example, when the plants are roses, the unit time may generally in the range of 0.5 to 4 hours, preferably 0.5 to 3 hours and more preferably 0.8 to 2 hours.

Moreover, no particular limitation is placed on the frequency of supply of the liquid fertilizer, and this may suitably be determined according to the type of the plants cultured, the time of cultivation, the hydroponic culture method, the weather and the like. For example, when the plants are roses, the frequency of supply of the liquid fertilizer may be in the range of 3 to 20 times per day, preferably 4 to 15 times per day, and more preferably 5 to 10 times per day.

Furthermore, no particular limitation is placed on the amount supplied (x) and the amount drained (y), and they may suitably be determined according to the type of the plants cultured, the time of cultivation, the hydroponic culture method, the weather and the like. For example, when the plants are roses and the culture bed used is a rock wool mat, the amount supplied (x) per plant may be in the range of 30 to 220 ml per supply per plant, preferably 50 to 170 ml per supply per plant, and more preferably 60 to 100 ml per supply per plant, provided that the culture bed measures 300 mm (width) x 910 mm (length) x 75 mm (thickness) and the spacing between plants is 100 mm.

On the other hand, when the amount supplied (x) is in the range of 30 to 220 ml per supply per plant, the amount drained (y) under the above-described conditions may be in the range of 5 to 138 ml per supply per plant, preferably 6 to 110 ml per supply per plant, and more preferably 9 to 88 ml per supply per plant. Moreover, when the amount supplied (x) is in the range of 50 to 170 ml per supply per plant, the amount drained (y) may be in the range of 8 to 106 ml per supply per plant, preferably 10 to 85 ml per supply per plant, and more preferably 15 to 68 ml per supply per plant. Furthermore, when the amount supplied (x) is in the range of 60 to 100 ml per supply per plant, the amount drained (y) may be in the range of 10 to 63 ml per supply per plant, preferably 12 to 50 ml per supply per plant, and more preferably 18 to 40 ml per supply per plant.

Thus, the feed ratio (x/y) may generally be in the range of 1.6 to 6, preferably 2 to 5, and more preferably 2.5 to 3.3.

If the feed ratio (x/y) is less than 1.6, an excessive amount of water is retained in the rooting zones. Consequently, even if the liquid fertilizer supplied by way of the feed tubes and the like contains a large amount of oxygen, the migration rate of oxygen and the displacement rate of noxious gases such as carbon dioxide and sulfide gases may be reduced.

Conversely, if the feed ratio (x/y) is greater than 6, the rooting zones fall into an advanced state of drying, the migration rate of oxygen and the displacement rate of noxious gases are increased, and the amount of water supplied to the plants tends to be reduced. This may impose stress on the plants, thus exerting an adverse influence on their absorption of nutrients.

Now, the devices for measuring the amount supplied and the amount drained are more specifically explained below. However, it is to be understood that the present invention is not limited to the use of these devices, but modifications and variations may suitably be made according to the type of the plants cultured, the time of cultivation, the hydroponic culture method, and the like.

Generally, delivery pumps and level sensors can be used as the devices for measuring the amount supplied and the amount drained.

As the delivery pumps, fixed displacement pumps or variable displacement pumps can generally be used. Useful fixed displacement pumps include, for example, tubular pumps, glass plunger pumps, roller pumps, glass cylinder pumps, seal less glass pumps, diaphragm pumps, bellows pumps and plunger pumps. Useful variable displacement pumps include, for example, turbopumps (e.g., volute pumps, axial flow pumps and mixed flow pumps) and positive displacement pumps (e.g., reciprocating pumps and rotary pumps). More specifically, magnet pumps and submergible pumps can be used. As the level sensors, for example, electrode type level sensors, float type (resistance type) level sensors, ultrasonic level sensors, capacitance type level sensors and microwave type level sensors. Among the foregoing delivery pumps, diaphragm type fixed-displacement pumps and bellows pumps are preferred because of their high accuracy and serviceability. Among the foregoing level sensors, float type (resistance type) level sensors and ultrasonic level sensors are preferred because of their high accuracy and serviceability.

In order to control the amount supplied and the amount drained by using these measuring devices, they may be simply combined with timers and flowmeters. However, more accurate control can be easily and efficiently achieved by using a personal computer or microcomputer in combination with relays and/or sequencers.

No particular limitation is placed on the shape of the culture bed used in the method of the present invention, and a culture bed having any desired shape may be used. However, it is preferable to use a culture bed which, in a cross section taken perpendicularly to the longitudinal direction of the culture bed, has at least one recess 15 in substantially the central part of the bottom of rooting zone support 3 as illustrated in FIG. 6, because such a culture bed is effective for the vitalization of plants. No strict definition is given to the shape of this recess 15, so long as the bottom of rooting zone support 3 is recessed in substantially the central part thereof. For example, the recess may have a semicircular or arcuate shape [FIG. 6(1)-(2)], a triangular shape [FIG. 6(3)] or a rectangular shape [FIG. 6(4)]. Among others, a recess having a semicircular or triangular shape is preferred, and a recess having a semicircular or arcuate shape is especially preferred.

Moreover, no particular limitation is placed on the number of such recesses, and it may suitably be chosen according to the type of the useful plants cultured, the time of cultivation, the composition and feed rate of the liquid fertilizer, the culture method, and the like. One or more recesses may be used.

Furthermore, no particular limitation is placed on the depth d of the recess(es), and it can suitably be determined according to the type of the useful plants, the time of cultivation, the type of the liquid fertilizer, and the like. However, the depth d of the recess(es) may generally be in the range of 0.5 to 10 cm, preferably 1 to 5 cm, and more preferably 2 to 3 cm. On the other hand, the width (W₂) of the recess(es) may generally be in the range of 1 to 25 cm, preferably 2 to 15 cm, and more preferably 3 to 7 cm.

The ratio (W₂/W₁) of the width (W₂) of the recess(es) to the width (W₁) of rooting zone support 1 may preferably be in the range of 1/30 to 5/6, more preferably 1/10 to 2/3, and most preferably 1/5 to 1/2.

Although the reason why such a recessed culture bed has the above-described plant-vitalizing effect is not clear, it is presumed that the root portions which are soaked in the liquid fertilizer always retained over the bottom of support 3 (i.e., the stagnant liquid fertilizer) and absorb nutrients therefrom, and the root portions which grow in the air while coming into contact with the liquid fertilizer falling in drops and hence absorbing both nutrients and oxygen sufficiently are present in appropriate proportions and perform their respective functions. In contrast, when a conventional support having no recess is used, most of the tips of the growing roots seem to be soaked in the stagnant liquid fertilizer and hence run short of oxygen.

If necessary, the recess(es) 15 of rooting zone support 3 in accordance with the present invention may be provided with a temperature-controllling pipe or tube through which air or water is passed for temperature control purposes. Thus, more suitable culture conditions can be obtained.

It is thought that, when the temperature of the recess(es) is directly maintained at the optimum value in the above-described manner, the humidity in the space of the recess(es) is also controlled and maintained at a proper level and, therefore, the sound growth of the plants can be achieved.

Furthermore, the present inventors have found that the sound growth of plants can be achieved by equipping the culture bed with a ventilation device as illustrated in FIG. 1 and thus culturing the plants while positively replacing the air contained in the rooting zone support.

Examples of the ventilation device include axial-flow and centrifugal fans of the turbo type, and rotary and reciprocating fans of the positive displacement type, and axial-flow fans (such as axial fans) and centrifugal fans (such as multiblade, radial and turbo fans) of the turbo type are preferred. Among others, centrifugal multiblade fans such as propeller fans, screw fans, clover fans and sirocco fans are preferred, and sirocco fans are most preferred.

Although exhaust (or ventilating) fan 16 comprising such a fan can be continuously or intermittently operated during cultivation, it is preferable to operate the exhaust (or ventilating) fan intermittently in the present invention. Since the purpose of positive replacement of the air contained in the rooting zone support is not only to supply oxygen to the rooting zones, but also to displace the above-described noxious gases positively, it is not always necessary to operate the fan excessively. If it is operated excessively, the rooting zones may be dried to impose stress on the roots. The operating conditions for this exhaust (or ventilating) fan may suitably be chosen with consideration for the type of the useful plants cultured, the time of cultivation, the stage of growth, the material of the support, the length of the support, the composition of the liquid fertilizer, and the like. Specific examples of the operating conditions are given below.

Although this exhaust (or ventilating) fan can be continuously or intermittently operated during cultivation, it is preferable to operate the exhaust (or ventilating) fan intermittently in the present invention. Where the exhaust (or ventilating) fan is intermittently operated during cultivation, it should preferably be operated in the daytime rather than in the nighttime. In particular, the time zone of operation preferably extends from 8:00 a.m. to 4:00 p.m. and more preferably from 10:00 a.m. to 2:00 p.m. Although the exhaust (or ventilating) fan may be continuously or intermittently operated in the above-described time zone, its intermittent operation is preferred. In the case of intermittent operation, the exhaust (or ventilating) fan may generally be operated at intervals of preferably 0.5 to 4 hours, more preferably 1 to 3 hours, and most preferably 2 hours.

Where the exhaust (or ventilating) fan is operated at such intervals of time, no particular limitation is placed on the running time for each operation of the exhaust (or ventilating) fan. However, the running time may generally be in the range of 90 to 0.5 minute, preferably 60 to 1 minute, more preferably 30 to 2 minutes, and most preferably 15 to 3 minutes.

Moreover, no particular limitation is placed on the velocity of the air flowing through the system during exhaustion (or ventilation), and it may suitably be determined according to the type of the useful plants cultured, the culture apparatus and method used, and the like. Generally, if the velocity of the air flowing through the system is high, plenty of oxygen is supplied to the support, but a problem may arise in that the support tends to dry. Conversely, if it is low, the supply of oxygen to the roots tends to be decreased. Thus, the velocity of air flow may generally be in the range of not greater than 1 m/s, preferably not greater than 0.6 m/s, more preferably not greater than 0.4 m/s, and most preferably not greater than 0.3 m/s.

According to the above-described hydroponic culture method, a favorable gaseous environment is created not only by supplying an adequate amount of oxygen to the rooting zones of useful plants, but also by displacing noxious gases (such as carbon dioxide and sulfide gases) accumulated in the rooting zones. This gaseous environment vitalizes the useful plants and hence promotes the growth of their roots, resulting in a marked improvement in yield and quality and an improvement in resistance to diseases.

### Examples

The present invention is further illustrated by the following examples. However, it is to be understood that the present invention is not limited to these examples.

### Examples 1-4 and Comparative Examples 1-2 and 6 (Relationship between the liquid fertilizer feeding method and plants)

Culture apparatus having the bed structure illustrated in FIGs. 1-5 were provided.

First of all, the main part of the bed is briefly explained. Numeral 1 designates liquid fertilizer rebounding plates (hereinafter referred to simply as "rebounding plates"), which were disposed right above a rock wool mat (hereinafter referred to simply as "RW mat") 3 and feed tubes 5. The distance a between rebounding plates 1 and feed tubes 5 was determined to be 7.5, 10 or 15 cm. Liquid columns (having a diameter of 0.3, 0.6 or 1.2 mm), which spout vigorously from feed tubes (having an internal pressure of about 0.6 kg/cm²) 5 and extend straight upward, impinge violently against rebounding plates 1 and thereby produce fine droplets in the spaces between rebounding plates 1 and the surface of RW mat 3. The distance b between rebounding plates 1 and the surface of RW mat 3 was 5, 10 or 40 cm. Various combinations of these conditions are shown in Table 1. A stand 4 supports culture pots 2 and RW mat 3, and has two grooves 18 extending in the longitudinal direction thereof. These grooves 18 serve as channels for the drainage of the liquid fertilizer and the passage of air so that the liquid having passed through the RW mat may be drained and outside air may be introduced. Moreover, in order to control the migration rate of water and air between RW mat 3 and stand 4, a nonwoven fabric 11 was disposed so that it spread substantially flat between RW mat 3 and stand 4 and had both edges extending along the lateral surfaces of RW mat 3. In order to prevent the RW mat from drying to an undue extent, a relatively thick nonwoven fabric (0.3 mm in thickness) made of polyester was used. A film 12 serves to shield RW mat 3 from light and maintain its temperature, and also serves to secure smooth drainage by disposing it along the inner walls of grooves 18 of stand 4. This film 12 comprised a thick film of soft polyvinyl chloride (about 0.3 mm in thickness) which was impervious to water and light, and had a black outside surface and an aluminized silver inside surface. As described above, this film 12 was disposed so that it came into close contact with the inner walls of grooves 18 of stand 4, and so that its edges extended out of the bed from between RW mat 3 and stand 4, and covered the top surfaces of rebounding plates 1 while wrapping nonwoven fabric 11, RW mat 3 and rebounding plates 1. When rebounding plates 1 were not used, this film 12 was disposed so that its edges extended out of the bed from between RW mat 3 and stand 4, and overlapped above pots 2 while wrapping nonwoven fabric 11, RW mat 3 and pots 2. Moreover, two feed tubes 5 having a diameter of about 25 mm were disposed at both lateral ends of the top surface of RW mat 3.

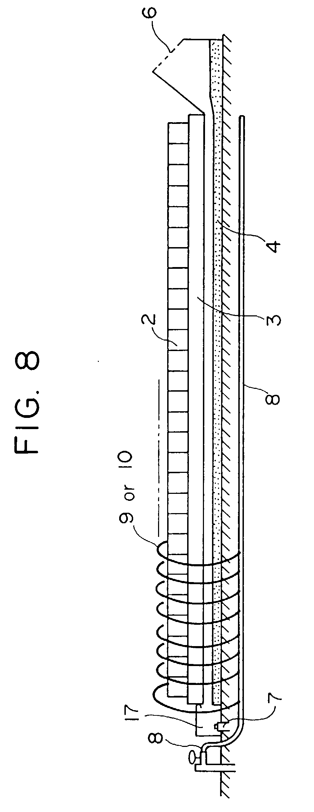

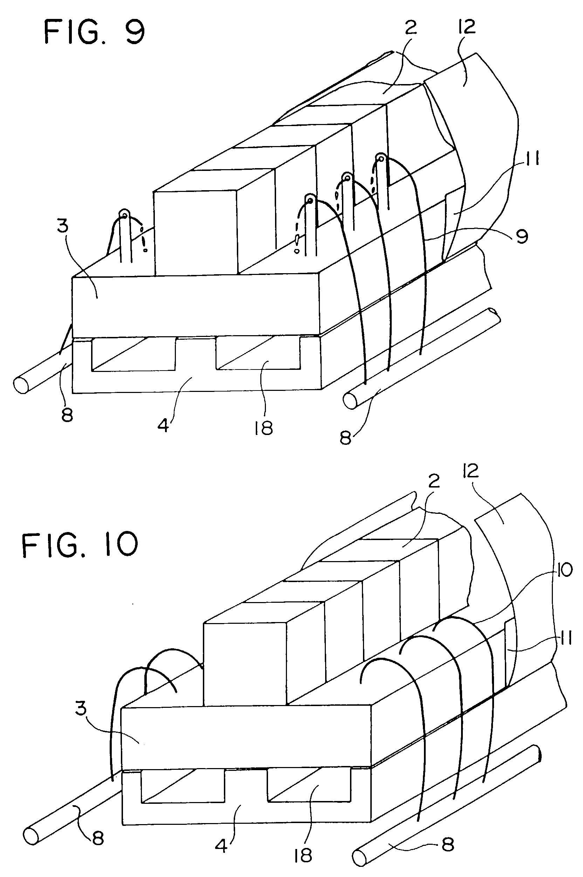

On the other hand, as most typical and most popular examples of conventional liquid fertilizer feeding methods for RW culture, the drip irrigation method (Comparative Example 1, FIGs. 8-9) and the tube insertion method (Comparative Example 2, FIGs. 8 and 10) using microtubes inserted into the bed were chosen. In order to compare the performance of the method of the present invention with that of these conventional methods, apparatus having the constructions illustrated in FIGs. 8-10 were provided. Excepting the irrigating device part and the rebounding plates, the basic structure of the bed was exactly the same as in the apparatus of FIGs. 2 and 3. These conventional apparatus were used under conditions enabling them to exhibit their capabilities to the fullest extent.

The size of droplets can be controlled by varying the distance a between the feed hoses and the rebounding plates (as shown in FIG. 4), the distance b between the top surface of the RW mat and the rebounding plates (as shown in FIG. 4), and the diameter of spouted liquid columns. For example, in order to adjust the size of falling droplets to not greater than 0.3 mm, the internal pressure of the feed hoses is maintained at 0.6 kg/cm² or greater and liquid columns having a diameter of 0.3 mm or less are caused to impinge vigorously against the rebounding plates. In this case, it is necessary to set distance a at 7 cm or greater and distance b at 10 cm or greater. Moreover, in order to adjust the size of falling droplets to 0.4 mm, the internal pressure of the feed hoses is maintained at 0.6 kg/cm² or greater and liquid columns having a diameter of 0.6 mm are caused to impinge vigorously against the rebounding plates. In this case, it is necessary to set distance a at 7 cm or greater and distance b at 40 cm or greater. Furthermore, in order to adjust the size of falling droplets to 2.5-3 mm, the internal pressure of the feed hoses is maintained at 0.6 kg/cm² or greater and liquid columns having a diameter of 1.2 mm are caused to impinge vigorously against the rebounding plates. In this case, it is necessary to set distance a at 7-10 cm and distance b at 5 cm. When distance b is shorter than distance a, the surface of the RW mat must be dug down by the sum of the diameter of the feed tubes and distance a in order to secure distances a and b.

In these examples, various combinations of distance a, distance b and the diameter of spouted liquid columns as shown in Table 1 were used to control the size of droplets.

Now, the method for measuring the diameters of droplets is described below. An Everlite rubber sheet (manufactured by Bridgestone Corp.) was used as a rubber plate for the measurement of the diameters of falling droplets. The characteristics of this rubber plate are as follows:
Type: Black rubber plate.
Product code: BSNB-010.
Material: natural rubber.
General properties:
   Hardness: JIS 60.
   Tensile strength: 180 kgf/cm².
   Elongation: 350%.
   DIN friction: 150 mm³.
   Permanent compression set: 40%.
   Wettability index; 45 dynes/cm (front surface), 32 dynes/cm (back surface).

In the neighborhood of spouted liquid columns, measurement was difficult because of the presence of an unduly large number of droplets. Accordingly, the diameters of falling droplets produced by an arbitrarily selected liquid column was measured at a position 25 cm away from it. More specifically, a number of spouted liquid columns were arbitrarily selected for measuring purposes, and the orifices of the other jet nozzles were stopped with adhesive tape, and a rubber plate for the measurement of droplet diameters was placed on the top surface of the RW mat at a position 25 cm away from a spouted liquid column in the longitudinal direction of the RW mat so that its back surface faced upward. The rubber plate was allowed to catch droplets on its back surface for 5 seconds, and immediately transferred to a transparent plastic box maintained at the saturated vapor pressure of water. Thus, the number of droplets per unit area and the sizes thereof were measured. Then, the average diameter of droplets was determined by excluding 10% of larger droplets and 10% of smaller droplets from all droplets and calculating the average diameter of the remaining 80% of droplets. The measuring device used for the measurement of droplet diameters was vernier calipers.

The cultivation of roses was carried out according to the conventional method employed for 1,000-tsubo houses.

Each apparatus was planted with 200 pot-grown rose seedlings (variety: Royal Dutch), and cultivation control was performed in the usual manner. During the period of time extending from planting to the start of harvesting, a total of three shoot pinches (including soft and hard pinches) were performed. Thereafter, flowers were harvested for 100 days and the number of harvested flowers per plant was calculated. Moreover, in order to examine the yield of roots, the roots growing in the bottom surface of the RW mat were collected 300 days after the start of cultivation. The collected roots were dried at 60°C for a week and then weighed.

For one month after planting, the EC concentration of the liquid fertilizer was 0.8. For the following two months, the EC concentration was gradually increased to about 1.5 in proportion to the growth of the plants. Thereafter, the EC concentration and pH in the rock wool mat (hereinafter referred to as the RW bed) were controlled so as to remain at about 2.0 and about 6.5, respectively.

In Examples 1-4, the liquid fertilizer was supplied five times in an amount of 1.1 liters per mat [measuring 30 cm (width) x 7.5 cm (height) x 91 cm (length)]. Its supply began at 5:00 a.m. and thereafter performed at intervals of 1.5 hours in a time zone extending from 8:00 a.m. to 3:30 p.m. In Comparative Examples 1-2, the liquid fertilizer was continuously supplied at a rate of 1.6 ml/min per plant in a time zone extending from 8:00 a.m. to 3:30 p.m.

The liquid fertilizer used had the composition described below and diluted with tap water to a given concentration (EC = 0.8-1.5). The composition of the liquid fertilizer was adjusted so that 100 liters of it contained 90.0 g of calcium nitrate, 8.4 g of ammonium sulfate, 33.0 g of potassium nitrate, 23.0 g of potassium dihydrogen phosphate, 8.7 g of potassium sulfate, 24.0 g of magnesium sulfate, 0.08 g of manganese sulfate, 0.1 g of zinc sulfate, 0.2 g of boric acid, 0.2 g of copper sulfate, 0.01 g of sodium molybdate, and 1.0 g of chelated iron.

Thus, roses were cultured in the above-described hydroponic culture apparatus, and cut flowers were harvested for a period of time extending from September 1 to January 30 of the next year. The results are summarized in Table 2.

Consequently, it can be seen from Table 2 that, as contrasted with the conventional methods (i.e., the dripping method and the tube insertion method) used in Comparative Examples 1 and 2, an improvement in the number of harvested rose flowers and the number of rose flowers of good quality was achieved when the liquid fertilizer was supplied in the form of fine droplets having a size of not greater than 1 mm. Especially when the size of droplets was 0.2 mm, an improvement in both yield and quality was observed.

When the average diameter of droplets was 2.5 mm, the yield and quality of rose flowers showed no appreciable improvement (Comparative Example 6).

### Examples 5-6 and Comparative Example 3 (Relationship between the timing of supply of the liquid fertilizer and the plants)

The effect of the amount of liquid fertilizer supplied was examined by using exactly the same apparatus as those used in Examples 1-4 and Comparative Example 1 (FIGs. 1-5 and FIGs. 8-9), except that the distance (a) between the feed hoses and the rebounding plates was 7.5 cm, the distance (b) between the top surface of the RW mat and the rebounding plates was 10 cm, the diameter of spouted liquid columns 14 was 0.6 mm, and the feed schedule of the liquid fertilizer was modified.

The feeding conditions employed in these examples are as shown in Table 1. The feed ratios [i.e., the ratios of the amount supplied (x) to the amount drained (y)] shown in this table were obtained in the following manner. The amount drained was measured just before each feeding time, and the sum of these values was regarded as the total amount drained in a day. Then, the ratio of the total amount supplied in the day to the total amount drained in the day (i.e., the daily feed ratio) was calculated. Moreover, the average feed ratio (x/y) during the harvest period was obtained. If the amount drained just before each feeding time was not greater than 10 ml per plant, the liquid fertilizer was additionally supplied in the same amount as for supply at the scheduled times, 30 minutes after the next supply. The level sensors used were float type (or resistance type) LE100S level meters (manufactured by Noken). The amount of the liquid fertilizer was measured by using them in combination with a Model LU1000 converter unit (manufactured by Noken) and a Model 4360002 recorder (manufactured by Yokokawa Electric Corp.).

On the other hand, for the conventional apparatus, conditions enabling them to exhibit their capabilities to the fullest extent were chosen. Thus, the liquid fertilizer was continuously supplied (at a rate of 1.6 ml/min per plant) in a time zone extending from 8:00 to 15:30.

Cultivation control was performed in exactly the same manner as in Examples 1-4 and Comparative Example 1. A harvest survey was made for 100 days and the number of harvested flowers per plant was calculated.

Thus, roses were cultured according to the above-described liquid fertilizer feeding method, and cut flowers were harvested for a period of time extending from April 28 to August 6. The results are summarized in Table 3.

As can be seen from Table 3, an improvement in yield and quality was observed at a feed ratio of 3.1.

### Examples 7-11 and Comparative Example 4 [Relationship between the recess(es) in the rock wool mat and the plants)

The apparatus used in these examples and comparative example were exactly the same as those used in Examples 1-2 and Comparative Example 1 (FIGs. 1-5 and FIGs. 8-9), except that the distance (a) between the feed hoses and the rebounding plates was 7.5 cm, the distance (b) between the top surface of the RW mat and the rebounding plates was 10 cm, the diameter of spouted liquid columns 14 was 0.6 mm, and the shape of RW mat 3 and the feed schedule of the liquid fertilizer were modified.

As rock wool mat 3, there were used rooting zone-supporting rock wool mats [hereinafter referred to as "RW mat"; each measuring 30 cm (width) x 7.5 cm (height) x 91 cm (length)] having at least one arcuate (semicircular or semielliptic), triangular or rectangular recess 15 in the bottom thereof. Typical shapes are shown in FIG. 6 and the sizes of recess(es) used in these examples are shown in Table 1. The liquid fertilized was supplied by maintaining the internal pressure of the feed tubes at about 0.6 kg/cm².

On the other hand, in order to comparatively examine the effects produced by differences in the shape of the bottom part of support 3, a conventional RW mat having a flat bottom surface was used as support 3 shown in FIG. 2. Excepting support 3, the basic structure of the bed was exactly the same as in Examples 7-10.

Cultivation control was performed in exactly the same manner as in Examples 1-4. In Example 10, the temperature control of rooting zone support 3 was performed by providing the arcuate recess 15 in the bottom of rooting zone support 3 with a water tube and passing hot water (or cold water, if necessary) therethrough. Thus, the RW mat was maintained at about 22°C during a period of time extending from the latter part of October to the latter part of March. In the other examples, no special heating of rooting zone support 3 was performed, and the average internal temperature of the house was maintained at 26°C in the daytime and at 21°C in the nighttime.

During the period of time extending from planting to the start of harvesting, three shoot pinches were performed. Thereafter, flowers were harvested for 212 days and the number of harvested flowers per plant was calculated. Moreover, in order to examine the yield of roots, the roots growing in the bottom surface of the RW mat were collected 300 days after the start of cultivation. The collected roots were dried at 60°C for a week and then weighed.

Thus, roses were cultured in the above-described hydroponic culture apparatus, and cut flowers were harvested for a period of time extending from September 1 to March 31 of the next year. The results are summarized in Table 4.

When the supports having recess(es) 15 in the bottom thereof were used, the number of harvested flowers increased by 10-16% as compared with the support having a flat bottom surface, and increased by about 30% as compared with the conventional method. Moreover, the yield of roots showed a similar tendency. That is, the yield of roots increased by 10-40% as compared with the support having a flat bottom surface, and increased 1.9-2.5 fold as compared with the conventional method.

### Examples 12-14 and Comparative Example 5 [Relationship between the operation of the ventilating fan and the plants)

The apparatus used in these examples and comparative example were exactly the same as those used in Examples 1-2 and Comparative Example 1 (FIGs. 1-5 and FIGs. 8-9), except that the distance (a) between the feed hoses and the rebounding plates was 7.5 cm, the distance (b) between the top surface of the RW mat and the rebounding plates was 10 cm, the diameter of spouted liquid columns 14 was 0.6 mm, and the shape of RW mat 3, the operating conditions of ventilating fan 16, and the feed schedule of the liquid fertilizer were modified.

A ventilating fan was installed in the ventilation window shown in FIG. 1, and operated so that air would migrate from the drain box side to the ventilation window side. The migration rate of air was measured by fixing a probe of a measuring instrument to the end of a groove of the stand on the drain box side. The migration of air was controlled by energizing or deenergizing ventilating fan 16 with the aid of a timer, and the rotational speed of ventilating fan 16 was varied to obtain a constant wind velocity (Table 5).

Cultivation control was performed in exactly the same manner as in Examples 1-4. No special temperature control of the support was performed, and the average internal temperature of the house was maintained at 26°C in the daytime and at 21°C in the nighttime.

During the period of time extending from planting to the start of harvesting, three shoot pinches were performed. Thereafter, flowers were harvested for 180 days and the number of harvested flowers per plant was calculated. Moreover, in order to examine the yield of roots, the roots growing in the bottom surface of the RW mat were collected 300 days after the start of cultivation. The collected roots were dried at 60°C for a week and then weighed.

Thus, roses were cultured according to the above-described liquid fertilizer feeding method, and cut flowers were harvested for a period of time extending from September 1 to the end of February of the next year. The results are summarized in Table 5.

It can be seen from Table 5 that the number of harvested flowers increased when air was made to migrate intermittently at a very low wind velocity of 0.3 m/s.

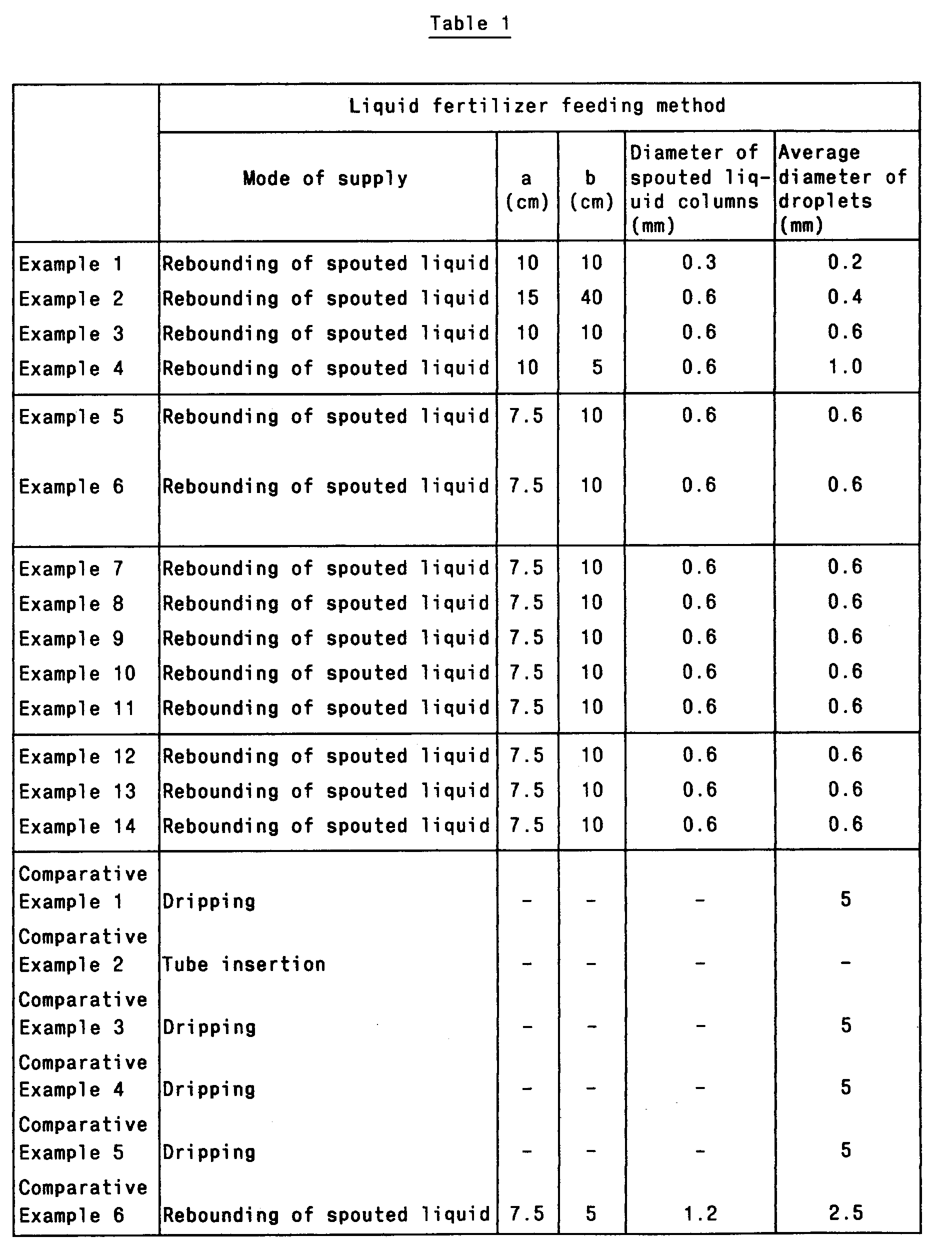

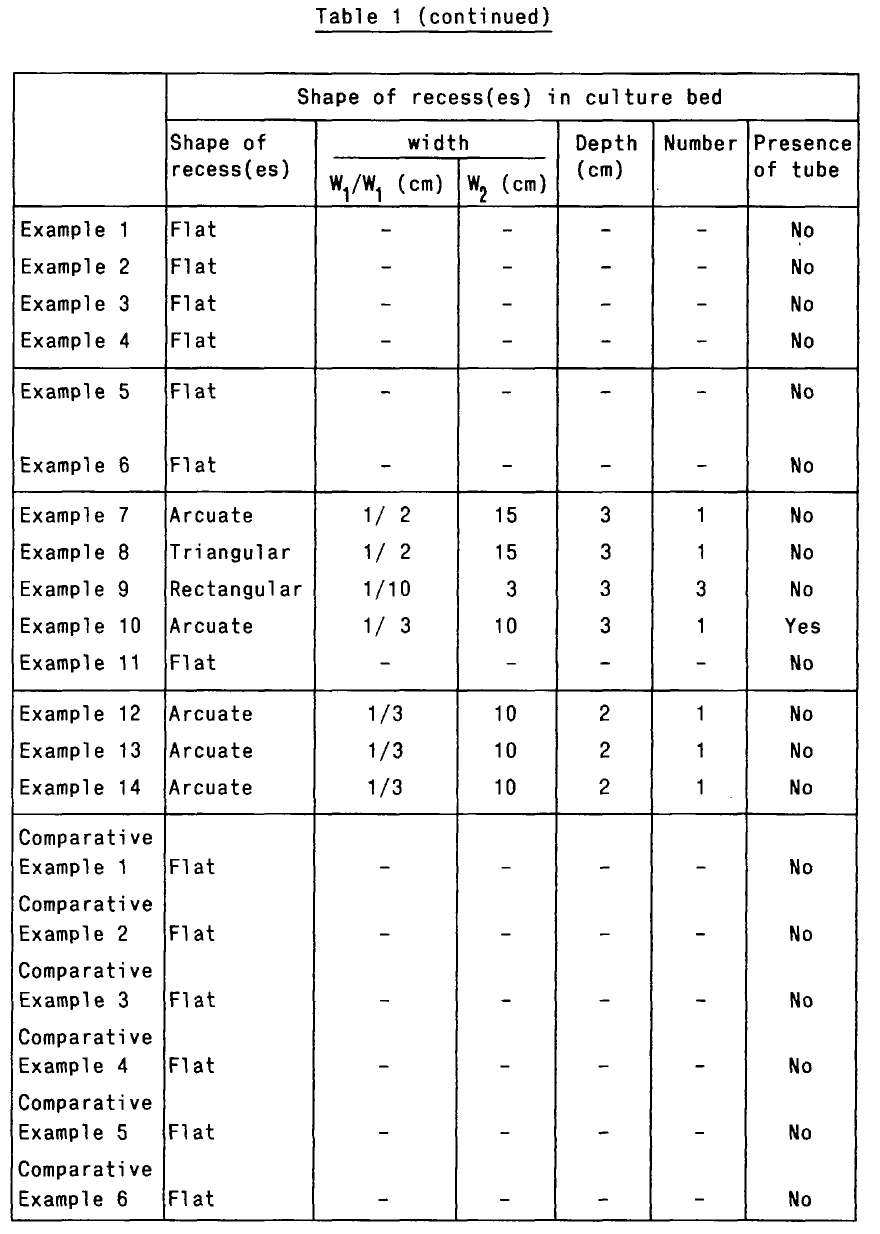

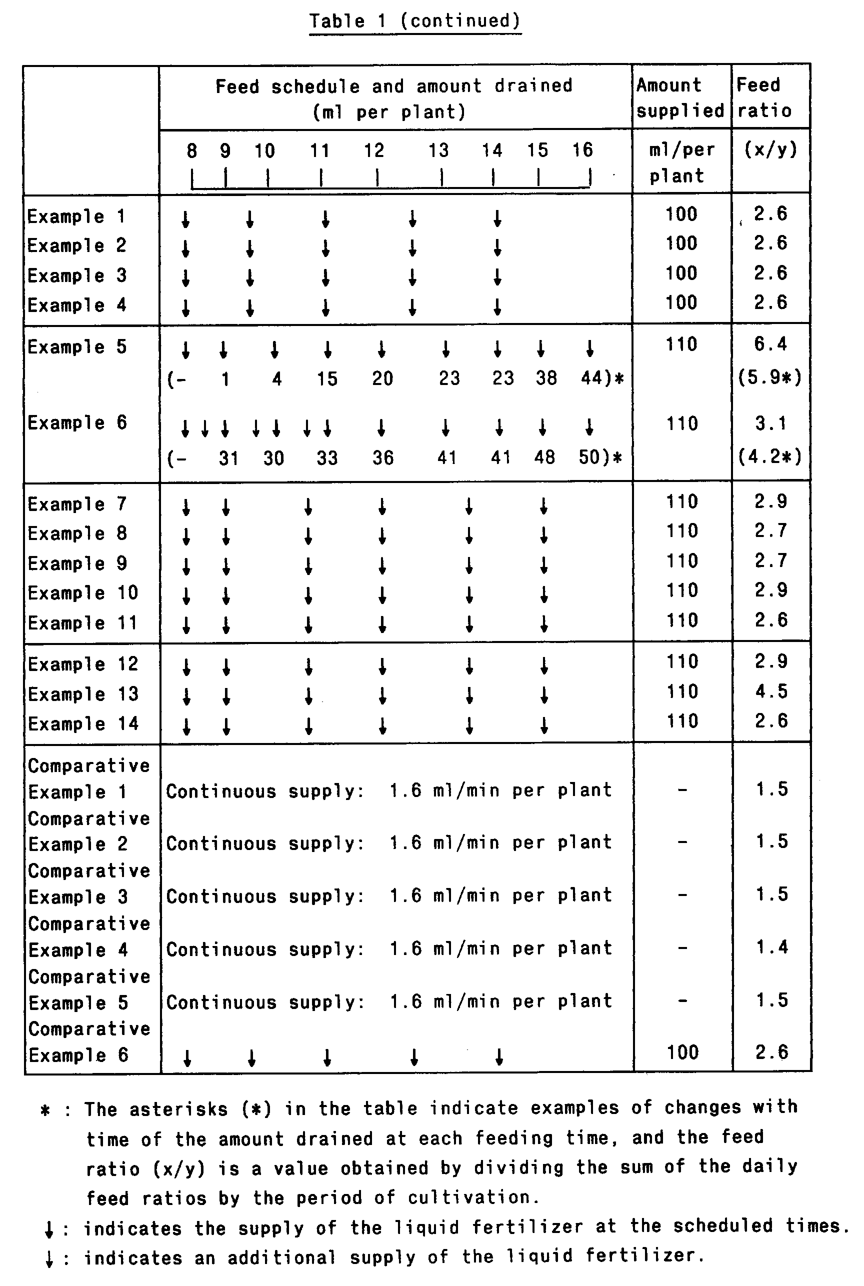

**Table 2**

| No. | Number of harvested flowers | | Number of flowers of good quality | |
|---|---|---|---|---|
| | (Number) | Index | (Number) | Index |
| Example 1 | 15.0 | 123 | 10.4 | 130 |
| Example 2 | 14.6 | 120 | 10.2 | 128 |
| Example 3 | 14.4 | 118 | 9.9 | 124 |
| Example 4 | 13.3 | 109 | 9.3 | 116 |
| Comparative Example 1 | 12.2 | 100 | 8.0 | 100 |
| Comparative Example 2 | 11.0 | 90 | 7.7 | 96 |
| Comprative Example 6 | 12.5 | 103 | 8.2 | 103 |
| Period of cultivation: From September 1 to January 30 of the next year. | | | | |

**Table 3**

| No. | Number of harvested flowers | | Number of flowers of good quality | |
|---|---|---|---|---|
| | (Number) | Index | (Number) | Index |
| Example 5 | 10.1 | 128 | 6.7 | 129 |
| Example 6 | 10.2 | 129 | 7.1 | 137 |
| Comparative Example 3 | 7.9 | 100 | 5.2 | 100 |
| Period of cultivation: From April 28 to August 6. | | | | |

**Table 4**

| No. | Number of harvested flowers | | Number of flowers of good quality | | Weight of roots | |
|---|---|---|---|---|---|---|
| | (Number) | Index | (Number) | Index | g/m² | Index |
| Example 7 | 22.7 | 131 | 15.8 | 140 | 315 | 246 |
| Example 8 | 22.3 | 129 | 15.6 | 138 | 240 | 188 |
| Example 9 | 22.3 | 129 | 15.7 | 139 | 299 | 234 |
| Example 10 | 23.0 | 133 | 17.2 | 152 | 308 | 241 |
| Example 11 | 20.6 | 119 | 14.1 | 125 | 221 | 173 |
| Comparative Example 4 | 17.3 | 100 | 11.3 | 100 | 128 | 100 |
| Period of cultivation: From September 1 to January 30 of the next year. | | | | | | |

**Table 5**

| | Method of ventilation | Time of ventilation (o'clock) | | | Operating time of fan | Wind velocity |
|---|---|---|---|---|---|---|
| Example 12 | Intermittent, forced ventilation | 10 | 12 | 14 | 15 min | 0.3 m/s |
| Example 13 | Continuous ventilation | ― | ― | ― | ― | 0.1 m/s |
| Example 14 | Natural ventilation | ― | ― | ― | ― | ― |
| Comparative Example 5 | ― | ― | ― | ― | ― | ― |

**Table 6**

| No. | Number of harvested flowers | | Number of flowers of good quality | | Weight of roots | |
|---|---|---|---|---|---|---|
| | (Number) | Index | (Number) | Index | g/m² | Index |
| Example 12 | 19.4 | 134 | 14.7 | 155 | 353 | 464 |
| Example 13 | 15.8 | 109 | 10.8 | 114 | 62 | 82 |
| Example 14 | 19.1 | 132 | 13.6 | 143 | 176 | 232 |
| Comparative Example 5 | 14.5 | 100 | 9.5 | 100 | 76 | 100 |
| Period of cultivation: From September 1 to the end of February of the next year. | | | | | | |

## Claims

1. A method for hydroponically culturing plants by using a culture bed comprising an inorganic or organic porous medium, characterized in that a liquid fertilizer is supplied from a position above the culture bed to a rooting zone support portion thereof in the form of droplets having an average diameter of not greater than 1 mm.

2. A method as claimed in claim 1 wherein the liquid fertilizer is supplied in the form of droplets having an average diameter of not greater than 0.5 mm.

3. A method as claimed in claim 1 wherein the feed ratio (x/y), which is defined as the ratio of the amount (x) of liquid fertilizer supplied in a unit time to the resulting amount (y) of liquid fertilizer drained, is in the range of 1.6 to 6.

4. A method as claimed in claim 1 wherein, in a cross section taken perpendicularly to the longitudinal direction of the culture bed, the culture bed has a recess at least in substantially the central part thereof.

5. A method as claimed in claim 1 wherein the plants are cultured with positive replacement of the air contained in the rooting zone support portion of the culture bed.

6. A method as claimed in claim 1 wherein the plants are roses.

7. An apparatus for hydroponically culturing plants which has a culture bed comprising an inorganic or organic porous medium, characterized in that the apparatus is equipped with a liquid fertilizer feeding device capable of supplying a liquid fertilizer from a position above the culture bed to a rooting zone support portion thereof in the form of droplets having an average diameter of not greater than 1 mm.

8. An apparatus as claimed in claim 7 wherein the liquid fertilizer feeding device comprises a liquid fertilizer feed tube having jet nozzles for delivering the liquid fertilizer maintained at a predetermined hydraulic pressure to the rooting zone support portion and an obstacle disposed above the liquid fertilizer feed tube at a predetermined distance therefrom, and the liquid fertilizer spouting from the jet nozzles is caused to impinge against the obstacle and thereby scattered in the form of droplets.

9. An apparatus as claimed in claim 8 wherein the hydraulic pressure is in the range of 0.4 to 1 kg/cm².

10. An apparatus as claimed in claim 8 wherein the distance from the jet nozzles to the obstacle is in the range of 0.5 to 50 cm and the distance from the obstacle to the surface of the rooting zone support portions is in the range of 3 to 100 cm.

11. An apparatus as claimed in claim 7 wherein the culture bed is made of rock wool.
